Europäisches Patentamt

(19) European Patent Office

Office européen des brevets

(11) Veröffentlichungsnummer: **0 146 547
B1**

(12) **EUROPÄISCHE PATENTSCHRIFT**

(45) Veröffentlichungstag der Patentschrift:
**20.11.86**

(51) Int. Cl.⁴: **B 62 D 3/06**

(21) Anmeldenummer: **83902432.0**

(22) Anmeldetag: **03.08.83**

(86) Internationale Anmeldenummer:
**PCT/EP 83/00207**

(87) Internationale Veröffentlichungsnummer:
**WO 84/01550 (26.04.84 Gazette 84/11)**

(54) **LENKGETRIEBE.**

(30) Priorität: **20.10.82 DE 3238740**

(43) Veröffentlichungstag der Anmeldung:
**03.07.85 Patentblatt 85/27**

(45) Bekanntmachung des Hinweises auf die Patenterteilung:
**20.11.86 Patentblatt 86/47**

(84) Benannte Vertragsstaaten:
**FR GB**

(56) Entgegenhaltungen:
**DE - A - 3 017 736
GB - A - 2 014 691
GB - A - 2 074 693
US - A - 2 936 643
US - A - 3 810 399**

(73) Patentinhaber: **ZAHNRADFABRIK FRIEDRICHSHAFEN AKTIENGESELLSCHAFT, Löwentaler Strasse 100 Postfach 2520,
D-7990 Friedrichshafen 1 (DE)**

(72) Erfinder: **ELSER, Dieter, Jägerstr. 10,
D-7081 Essingen/Lauterberg (DE)**

(74) Vertreter: **Raue, Reimund, Zahnradfabrik Friedrichshafen AG Löwentaler Strasse 100 Postfach 2520,
D-7990 Friedrichshafen 1 (DE)**

## Beschreibung

Ein Lenkgetriebe nach dem Oberbegriff des Patentanspruchs ist z.B. aus der DE-OS 30 13 855 bekannt. Ein derartiges Lenkgetriebe besitzt als Antriebsglied z.B. eine als Arbeitskolben ausgebildete Lenkmutter, die bei Drehung an einer Lenkspindel eine Axialbewegung ausführt. Die Lenkmutter greift über eine zahnstangenartige Verzahnung in ein Zahnsegment ein. Das Zahnsegment ist mit einer einen Lenkhebel tragenden Segmentwelle fest verbunden. Der Lenkhebel ist über ein Lenkgestänge an die Vorderräder angeschlossen. Zum leichteren Einstellen des Verzahnungseingriffs von Lenkmutter und Zahnsegment ist die Segmentwelle in zwei Lagerbuchsen mit exzentrischen Bohrungen gelagert. Diese Lagerbuchsen ermöglichen durch Verdrehen eine Zustellung der Segmentwelle in Richtung der Lenkmutter bis die optimale Verzahnungseinstellung erreicht ist. Hierauf werden von aussen zugängliche, zwischen dem Gehäuse und den Lagerbuchsen vorgesehene Ringspalten mit einem aushärtenden, flüssigen Kunststoff ausgegossen. Ausserdem sind die Lagerdeckel durch mit dem Gehäuse verschraubte Konterringe axial gesichert. Auf diese Weise erhält man eine hochfeste Fixierung der Lagerbuchsen, die die wechselseitige Kräftebeaufschlagung der Segmentwellenverzahnung zuverlässig aufnehmen kann. Die beschriebene Befestigung der Lagerbuchsen lässt sich jedoch beispielsweise zum Zwecke des Austauschs der Dichtringe oder der Wälzlager der Segmentwelle nur mit beträchtlichem Arbeitsaufwand wieder lösen. Hinzu kommt, dass nach dem Zusammenbau die Verzahnungseinstellung erneut vorgenommen werden muss.

Es ist daher Aufgabe der Erfindung, eine möglichst kostengünstige und leicht demontierbare Befestigung für die Lagerbuchsen zu finden. Die Befestigung soll dabei so ausgeführt sein, dass beim Wiedereinbau der Lagerbuchsen keine Neueinstellung der Verzahnung vorzunehmen ist.

Nach der Erfindung sind die Lagerbuchsen mit einem Ringansatz versehen, der nach Einstellen der Verzahnung in eine oder mehrere Nuten des Gehäuses verstemmt wird. Die Lagerbuchsen sind somit gegen Drehen gesichert. Zur Axialbefestigung der Lagerbuchsen ist jeweils noch ein in eine Gehäuseringnut eingreifender Federring vorgesehen. Die Lagerbuchsen können somit nach Entfernen des Federringes auf einfache Weise nach vorn abgezogen werden. Zum Wiedereinsetzen der Lagerbuchsen sind lediglich die Verstemmungen des Ringansatzes mit den Gehäusenuten in Deckung zu bringen und die Lagerbuchsen in die Gehäusebohrungen einzudrücken. Somit entfällt eine erneute Einstellung der Verzahnung.

Die Erfindung ist nachfolgend anhand eines in der Zeichnung dargestellten Ausführungsbeispiels näher erläutert. Es zeigen:

Fig. 1 einen Querschnitt durch eine Servolenkung mit der Segmentwelle,

Fig. 2 einen Schnitt nach der Linie II-II in Fig. 1.

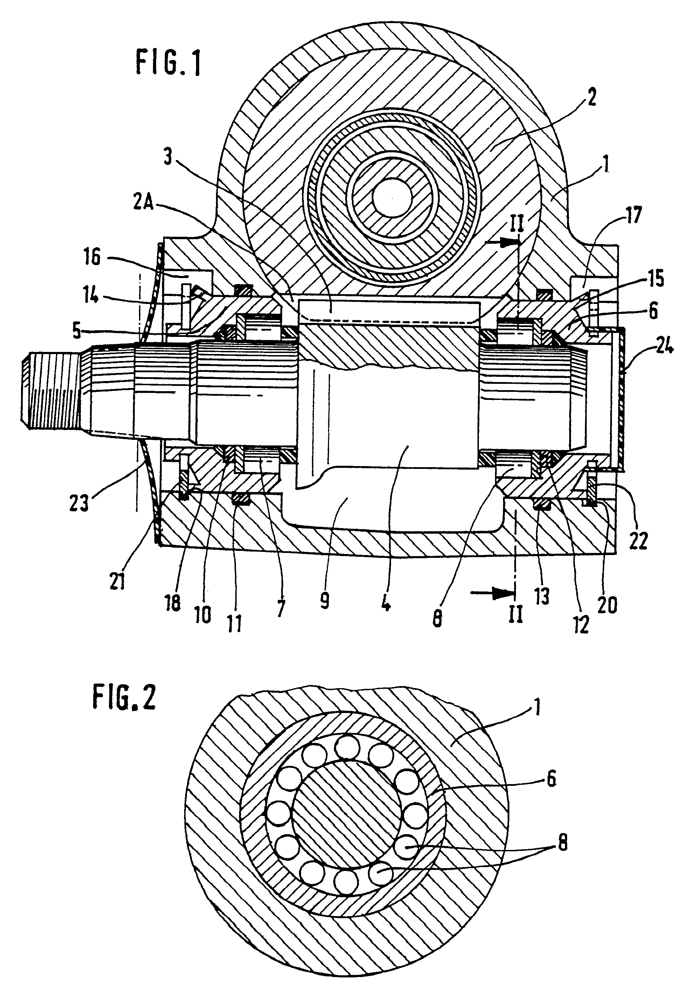

In einem Lenkgehäuse 1 ist ein zugleich als Lenkmutter wirkender Arbeitskolben 2 mit einer zahnstangenartigen Verzahnung 2A verschieblich gelagert. Der Arbeitskolben 2 führt in üblicher Weise bei Drehung einer nicht sichtbaren Lenkspindel eine Axialbewegung aus. Die zahnstangenartige Verzahnung 2A am Arbeitskolben 2 steht im Zahneingriff mit einem Zahnsegment 3 der Segmentwelle 4. Die Segmentwelle 4 ist über zwei exzentrisch gebohrte Lagerbuchsen 5 und 6 (Fig. 2) in Wälzlagern 7, 8 gelagert. Um die erforderliche Spielfreiheit einzustellen, kann durch entsprechendes Verdrehen der Lagerbuchsen 5 und 6 die Segmentwelle 4 in Richtung auf die Verzahnung 2A des Arbeitskolbens 2 bewegt werden. Der Druckraum 9 des Gehäuses ist durch Dichtringe 10, 11 bzw. 12, 13 nach aussen abgedichtet.

Nach der Erfindung sind die Lagerbuchsen 5 und 6 mit Ringansätzen 14 bzw. 15 versehen. In das Gehäuse sind in Achsrichtung verlaufende, kurze Nuten 16 bzw. 17 eingearbeitet. Nach dem Einsetzen der Lagerbuchsen 5 und 6 und der Verzahnungseinstellung werden die Ringansätze 14 bzw. 15 in den Nuten 16 bzw. 17 partiell verstemmt. Anstelle von nur einer Nut 16 und 17 je Lagerbuchse können selbstverständlich auch zwei oder mehr Gehäusenuten vorgesehen sein, in die die Ringansätze 14 und 15 dann zu verstemmen sind. Zur axialen Sicherung der Lagerbuchsen 5 und 6 sind in Ringnuten 18 und 20 des Gehäuses 1 eingreifende Federringe 21 bzw. 22 vorgesehen. Die Segmentwellenlagerung ist mit Staubkappen 23 und 24 abgedeckt.

*Bezugzeichen*

1 Lenkgehäuse
2 Arbeitskolben
2A Verzahnung
3 Zahnsegment
4 Segmentwelle
5 Lagerbuchse
6 Lagerbuchse
7 Wälzlager
8 Wälzlager
9 Druckraum
10 Dichtring
11 Dichtring
12 Dichtring
13 Dichtring
14 Ringansatz
15 Ringansatz
16 Nut in 1
17 Nut in 1
18 Ringnut in 1
19 –
20 Ringnut in 1
21 Federring
22 Federring
23 Staubkappe
24 Staubkappe

## Patentanspruch

Lenkgetriebe mit folgenden Merkmalen:

a) in einem Lenkgehäuse (1) ist eine in ein verzahntes Antriebsglied (2) eingreifende mit einer Verzahnung versehene Segmentwelle (4) gelagert;

b) die Segmentwelle ist über exzentrische Lagerbuchsen (5, 6) in Richtung zum Antriebsglied hin verstellbar, gekennzeichnet durch folgende Merkmale:

c) die Lagerbuchsen (5, 6) weisen einen in eine oder mehrere Gehäusenuten (16, 17) verstemmbaren Ringansatz (14, 15) auf und

d) die Lagerbuchsen (5, 6) sind durch Federringe (21, 22) axial im Gehäuse (1) gesichert.

## Claim

Steering mechanism with the following features:

a) a sector shaft (4), provided with a toothed section (3) engaging in a geared drive member (2), supported in a steering housing (1);

b) the sector shaft (4) is adjustable towards the driving member (2) by means of excentric bearing bushes (5, 6), characterized in that:

c) the bearing bushes (5, 6) are provided with collars (14, 15) to be peened in one or several housing recesses (16, 17), and

d) bearing bushes (5, 6) are actually secured in housing (1) by spring loaded retaining rings (21, 22).

## Revendication

Boîtier de direction avec les caractéristiques suivantes:

a) dans un boîtier de direction (1) se trouve un arbre à secteur denté (4) venant s'engager dans un élément de cmmande denté (2) et lui-même doté d'une denture (3);

b) l'arbre à secteur denté (4) peut se régler en direction de l'élément d'entraînement, par l'intermédiaire de coussinets à alésage excentrés (5, 6), caractérisé par les propriétés suivantes:

c) les coussinets (5, 6) possèdent un talon annulaire (14, 15) pouvant se mater dans une ou plusieurs gorges (16, 17) du carter (boîtier) de direction, et

d) les coussinets (5, 6) sont arrêtés dans le sens axial, à l'intérieur du carter (boîtier) de direction (1), par des rondelles Grower (21, 22).

FIG.1

FIG.2